# EUROPEAN PATENT SPECIFICATION

(11) **EP 3 320 674 B1**
(45) Date of publication and mention of the grant of the patent: **16.11.2022**
(21) Application number: 16729245.7
(22) Date of filing: 10.06.2016
(51) Int. Cl.: H04M 3/02, H04M 3/42, H04M 19/04, H04M 7/00

(54) **SYSTEM AND METHOD FOR ALERTING A USER**
SYSTEM UND VERFAHREN ZUM WARNEN EINES BENUTZERS
SYSTÈME ET PROCÉDÉ POUR ALERTER UN UTILISATEUR

(30) Priority: 09.07.2015 SE 1500301
(43) Date of publication of application: 16.05.2018
(73) Proprietor: Omnitor AB, 120 30 Stockholm (SE)
(72) Inventor: ULFSPARRE, Christer, 171 58 Solna (SE); JAKOBSSON, Simon, 162 73 Vällingby (SE); FRIBERG, Christoffer, 123 48 Farsta (SE)
(74) Representative: Bjerkén Hynell KB
(86) International application number: PCT/EP2016/063345
(87) International publication number: WO 2017/005455

(56) References cited:
- US-A1- 2001 042 097
- US-A1- 2008 186 199
- US-A1- 2010 217 837
- US-A1- 2014 270 101

## Description

### TECHNICAL FIELD

The invention described herein generally relates to an alerting system control server, a method in the alerting system control server, an alerting system controller, a method in the alerting system controller and an alerting system.

In particular, a mechanism is herein described, for alerting a user of an incoming signal to a service associated with the user.

### BACKGROUND

An increasing number of people are having problems with their hearing ability. There are three major tools to aid hearing-impaired and deaf individuals: hearing aids, special telephony, and alerting systems. Both hearing aids and telephony have seen a huge technical development. Hearing aids have gone from huge ponderous devices to small delicate in ear-devices. Simple text-telephones have evolved into total conversation telephones with audio, video, and text all operating in real-time.

Development of alternative alerting systems is however unsatisfactory, although smart lamps and other alerting services, not specially made for hearing-impaired individuals do exist. The problem with those alerting system is that they do not offer a variety of alerting methods, for example, a telephone can play a sound but not make lamps in the household flash on incoming call. This makes the solutions very static and not very helpful as different people have different needs. The gap in technology is a huge problem and integration between modern communication devices and an alerting system is getting harder.

Previously known alerting systems for hearing-impaired and deaf people consists of a sender, for example a doorbell-button, and a receiver, the doorbell; but instead of playing a tune the receiver flashes a light or vibrates to inform the deaf user that someone has pressed the doorbell button. There are many products offered by companies that offer a variety of services, the most usual ones are alarm clocks, baby-monitors, doorbells, and motion sensors. After looking at these products, it is possible to note that many companies utilise wireless technology for the communication between the sender and receiver as a replacement for their previous wired solutions. The wireless technologies used are various custom 2.4 GHz solutions or 868.3 MHz / 433 MHz solutions.

Further, devices or components from different producers generally lack interoperability with components from other producers, as they are typically using proprietary communication protocol solutions, not following any communication standard. Thereby only dedicated communication devices and alerting devices may be used, i.e. a user that desire to use a certain tablet or iPad cannot do that.

The user thereby has little flexibility to alter both communication devices and alerting devices according to previously known solutions. The lack of flexibility is a common issue in systems made to alert users, based on services.

Also from a security point of view, current Frequency Modulation (FM)-radio based solutions are unsatisfactory, as the emitted radio signals may be recorded and replayed, triggering alerting system receivers.

However, alerting is a problem also in association with other services provided for example in smart homes etc. Some senior and/ or other citizens with special needs, may require e.g. a reminder, or alert signal, when to take a certain medicine etc.

Sometimes, it may be desired for a nursing staff to check whether a senior citizen or patient living in his/ her home is OK, without harassing the patient or intruding his/ her home. This may be made by alerting/ reminding the patient of making an activity such as sending a message to the nursing staff, and e.g. activating a remote controlled camera in the patients home if said activity is not performed by the patient. However, for such safety measure to work and achieve a common acceptance, it is important the patient is alerted in a convincing manner.

Furthermore, it is a problem for a user, impaired or not, to notice for example an incoming video call on a computer. The computer may e.g. be situated in another room, on another floor and/ or in another building than where the user is currently situated for example, leading to a lost video call.

Document US 2001042097 A1 describes a system with a method and apparatus for alerting an internet client, who orders a service, with information about the order and its service delivery, by a wireless network. The client may be invited to participate in a future event, such as the delivery of the service. The client receives an alerting message on a pager, at or near the time of the future event.

The method and apparatus relate to a dedicated service for providing a pager signal to a user. However, the method/ apparatus is not possible to adapt, neither to an alerting ser- vice of a communication device, nor to another alerting device. The latter is because the pager is not compatible with any other hypothetical alerting device. Further, a hearing impaired person may not notice the signal received on the pager.

Document US 2014/270101 A1 discloses a stand-alone system, which is situated at a user's premises, and a method for indicating an incoming signal and its information by visual means. An indicator controller receives the signal at the same time as the signal, in parallel, is received by the user's communication means. The system comprises a spatial visual indicator that is activated by said indicator controller, such that the indicator is arranged to display information regarding the presence of the incoming signal as well as regarding the origin of said signal, the caller number or other information that is included in the incoming signal.

Document US 2008/186 199 A1 discloses a system for alerting a user of an incoming signal. A network feeds an incoming signal to the system, which is set at the premises of the user. The system is arranged to interrupt and replace signals that are fed to and control devices such as a video device and other communication devices, whereby the devices display a message or make an audible announcement. The user gets this information on these devices, of the user's choice, whereby the hearing or visually impaired person may be alerted about said incoming signal.

Document US 2010/217837 A1 discloses a gateway system arranged at the premises of a user. An external network conveys a signal to the gateway system, which further conveys a signal to different devices. The incoming signal may be of different types, such an update for user's endpoint devices, or media content to media players or video activity streaming to dedicated devices or updating data on a storage medium. Said gateway has a voice manager built in, to supply traditional central office functions, such as connecting endpoint devices or for enabling home automation systems.

It is therefore desired to develop a technological missing link between modern communication devices and alerting systems, so that a user is enabled to adapt the alerting according to own preference.

### SUMMARY

It is therefore an object to obviate at least some of the above mentioned disadvantages and to provide an alert notification to a user, of an incoming signal for a service associated with the user.

This and other objects are achieved by the features of the appended independent claims. Further implementation forms are apparent from the dependent claims, the description and the figures.

According to the invention, a method is provided according to claims 1 and 4.

Further, according to the invention, an alerting system control server is provided according to claim 2.

Further, according to the invention, an alerting system controller is provided according to claim 5.

Thanks to the disclosed solution, a flexible alerting of a user is achieved, which enable the user to use any desired communication device and a variety of services to the alerting system. Furthermore, one or several alerting devices as selected by the user may be connected to the alerting system. By providing the communication between the alerting system controller and the alerting device over a communication protocol based on the Internet Protocol, it becomes possible for the user to easily change alerting device, or completing it with additional alerting devices. Thus the alerting could be adapted by the user, to the particular needs of that user, i.e. a hearing impaired user may prefer a visual signal such as a flashing light, when receiving an incoming signal to e.g. a video conference. Thereby an improved alerting of the user is provided.

Other objects, advantages and novel features of the described aspects will become apparent from the following detailed description.

### BRIEF DESCRIPTION OF THE DRAWINGS

Various embodiments are described in more detail with reference to attached drawings, illustrating different examples of embodiments in which:
- **Figure 1**: is a block diagram illustrating a system for alerting a user of an incoming service associated with the user, according to an embodiment.
- **Figure 2**: is a flow chart illustrating a method in an alerting system control server, according to an embodiment.
- **Figure 3**: is a block diagram illustrating an alerting system control server, according to an embodiment.
- **Figure 4**: is a flow chart illustrating a method in an alerting system controller, according to an embodiment.
- **Figure 5**: is a block diagram illustrating an alerting system controller, according to an embodiment.

### DETAILED DESCRIPTION

Embodiments of the invention described herein are defined as an alerting system control server, a method in an alerting system control server, an alerting system controller, a method in an alerting system controller, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

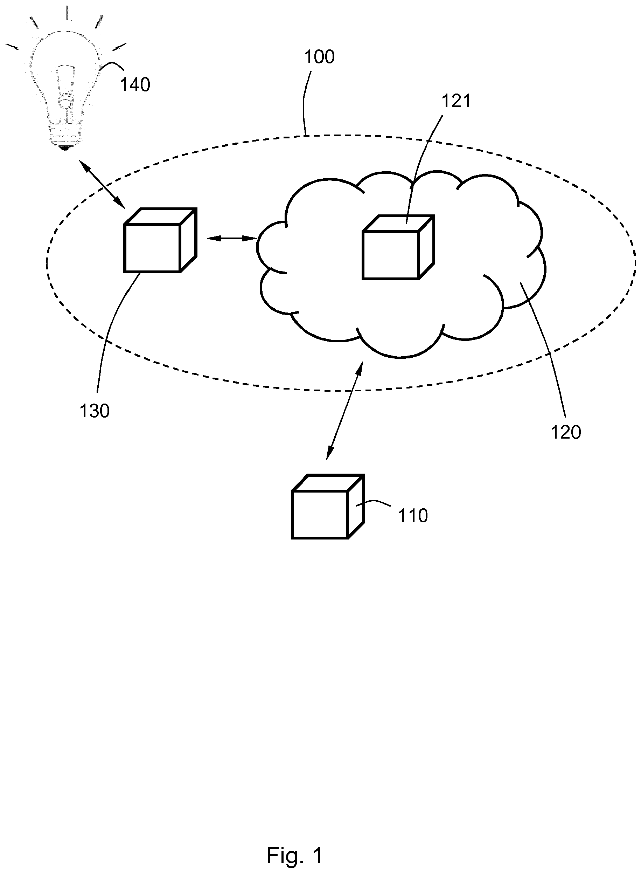

**Figure 1** is a schematic illustration over an alerting system **100,** comprising an Alerting System Control (ASC) server **121** comprised in a set of servers **120,** and an alerting system controller **130.**

The alerting system control server 121 is configured for communication with an internet service server **110,** not comprised in the alerting system 100. Further the alerting system controller 130 is configured for communication with an alerting device **140.**

In a scenario when the user is receiving e.g. an incoming video call via the internet service server 110, the internet service server 110, besides sending a message to the communication device of the user, also sends a message to the alerting system control server 121 in the set of servers 120. The alerting system controller 130 has previously established a connection to the cloud service, the outgoing connection is able to penetrate the local router's firewall. Over this connection, the alerting system controller 130 receives a command from the alerting system control server 121 and activates the alerting device 140, or alerting devices as the case may be.

The communication device of the user may be e.g. a mobile cellular phone, a computer, a tablet computer, total communication device or any other kind of device configured to communicate over a network, according to different embodiments and different vocabulary.

The illustrated alerting system 100 is independent of any firewalls and not limited to one network, for example. The setup does not require the user's communication device and alerting system controller 130 to be connected to the same local network, for example.

The set of servers 120 may sometimes be referred to as a cloud. Cloud computing refers to the practice of transitioning computer services such as computation or data storage to multiple redundant offsite locations available on the Internet, which allows application software to be operated using internet-enabled devices.

The set of servers 120 may comprise at least one server 121 and optionally one or more databases, and provide a plurality of services. In some embodiments, the administration of the alerting system control server 121 may be made over an internet interface in some embodiments. Further, all activities performed in the alerting system control server 121 may be logged continuously, e.g. by another server in the set of servers 120 in some embodiments.

An advantage with putting the main part of the computations in one or more servers 121 in the set of servers 120 is that program upgrading becomes easier and may be made without involving the end user.

It is to be noted that the illustrated setting of one instance of the alerting system controller 130 and one instance of the alerting system control server 121 in the set of servers 120 in Figure 1 is to be regarded as a non-limiting example of an embodiment only. The alerting system 100 may comprise any other number and/ or combination of the alerting system controller 130 and servers 121 in the set of servers 120. When reference is made herein to "the alerting system control server 121", a group of servers in the set of servers 120 may be involved, according to some embodiments.

Thus whenever "one" or "a/ an" alerting system control server 121, and/ or alerting system controller 130 is referred to in the present context, a plurality of the first network node 110, and/ or alerting system controller 130 may be involved, according to some embodiments.

The communication between the internet service server 110 and the alerting system control server 121 in the set of servers 120 may be made over a communication protocol in some embodiments, which may be non-proprietary and non-restrictive such as e.g. Transmission Control Protocol/ Internet Protocol (TCP/ IP), Session Initiation Protocol (SIP), Post Office Protocol (POP), Internet Message Access Protocol (IMAP), Hypertext Transfer Protocol (HTTP), Simple Object Access protocol (SOAP), just to mention some few examples.

The alerting system controller 130 may e.g. be situated in the home of the user. However, the alerting system controller 130 may also be portable in some embodiments. Furthermore, one user may have a plurality of alerting system controllers 130 in some embodiments. In other embodiments, a plurality of users, such as e.g. a family, may share one common alerting system controller 130.

The alerting system controller 130 is configured for communication with the alerting system control server 121 comprised in the set of servers 120, e.g. via a communication protocol.

Furthermore, the alerting system controller 130 is configured for communication with the alerting device 140 via a wired or wireless communication interface, based on the Internet Protocol. Such communication interface may comprise e.g. WiFi, Bluetooth, Ethernet, Universal Serial Bus (USB), relays etc. Thereby, an alerting command generated by the alerting system control server 121 may be received by the alerting system controller 130 and trigger an alerting signal to be transmitted by the alerting system controller 130 to the alerting device 140, or plurality of alerting devices 140 as the case may be.

Thereby, thanks to providing the communication between the alerting system controller 130 and the alerting device 140 over a communication protocol based on the Internet Protocol, the user may use any arbitrary alerting device 140, capable of internet communication, such as an Internet of Things (loT) device. It is thereby also possible for the user to re-use an already owned alerting device 140. Thereby resources are saved.

It is to be noted that the alerting device 140 per se is not part of the alerting system 100. Instead, any appropriate alerting device 140 configured for communication with the alerting system controller 130 over the communication interface may be utilised.

The alerting device 140 may comprise a lamp, a diode, a loudspeaker, a stroboscope, a tactile device, etc., or a combination thereof.

For the alerting system 100 to work, a communication protocol is applied between the three entities: the alerting system control server 121, the alerting system controller 130 and the internet service server 110.

However, there are different requirements and needs for the communication channel between the alerting system control server 121 and the alerting system controller 130, and the communication channel between the alerting system control server 121 and the alerting system controller 130. The communication channel between the alerting system control server 121 and the alerting system controller 130 may be referred to as a closed protocol channel, while the communication channel between the alerting system control server 121 and the internet service server 110 may be referred to as an open protocol channel.

The names are selected as the closed protocol is hidden from public by encryption while the open protocol may be open and accessible for generic services. The closed protocol channel got its name from the fact that communication between the alerting system control server 121 and the alerting system controller 130 may with advantage be hidden, unmodifiable, and secure, in other words this channel may be closed for the public. Thereby spoofing and/ or unauthorised activation of the user's alerting device 140 without permission without first passing through the alerting system 100 is avoided. To ensure this security, web security solutions such as Secure Sockets Layer (SSL) and/ or Transport Layer Security (TLS) may be applied to this closed protocol channel.

While the closed protocol channel may be encrypted and hidden from the public, the open protocol channel may be usable by anyone, as not only one dedicated internet service server 110 may be able to utilise the alerting system control server 121, but a plurality of other internet service servers may be able to communicate with the alerting system control server 121. Thereby alerts associated with different services may be provided to the alerting system control server 121. Thereby, future development of new services is enabled, which may fill the gap between alerting systems and modern loT products.

The Internet of Things, sometimes also referred to as Internet of Everything, is the network of physical objects or "things" embedded with electronics, software, sensors, and connectivity to enable objects to exchange data with the manufacturer, operator and/ or other connected devices. The loT allows objects to be sensed and controlled remotely across existing network infrastructure, creating opportunities for more direct integration between the physical world and computer-based systems. Each thing is uniquely identifiable through its embedded computing system but is able to interoperate within the existing Internet infrastructure.

To provide security for the open protocol, asymmetric key cryptography may be used. Asymmetric key cryptography requires some extra handling of the certificate and public keys that are supposed to be distributed by third parties. Thereby unauthorised activations of a user's alerting system 100 may be avoided.

The messages sent through both the open channel and the close channel may be generic and easy to alter when new features is being added. The protocol format on both the open as well as the closed channel may be the same to cut the development time and lower the complexity of the system 100.

The open channel may take as easy as possible messages, making the implementation on the internet service server 110 and on any possible third party platforms minimal. Minimal implementation for the open communication channel mean less compatibility problems with software not part of these system, as third parties may have their own software. The closed channel messages can be extended over time because updates can be released to both the alerting system controller 130 and the alerting system control server 121, compared to scripts and software developed by third parties. A solution according to some embodiments may be to releasing an Application Programming Interface (API).

In a cloud-connected network architecture, without an established SIP infrastructure, an advantage of using SIP protocol is to lower the development effort if existing software can be used. However, alternatively e.g. TCP or any other internet protocol may be utilised instead, which may be an easier protocol to implement, according to some embodiments.

Two arbitrary examples of common text-notation formats which may be used in different embodiments may be JavaScript Object Notation (JSON) and EXtensible Markup Language (XML). Both JSON and XML may have libraries for several different platforms, which helps parsing and enable a briefer implementation time. An advantage with using JSON is that it is self-describing and appropriate for software development.

The software running on the alerting system control server 121 and the alerting system controller 130 may be developed e.g. in Java in some embodiments. An advantage with using Java is its multiplatform properties and widespread use.

An administrative interface may be implemented in e.g. Hypertext Preprocessor (PHP). An advantage with using PHP may be that it facilitates integration with HyperText Markup Language (HTML) and may be used for a web-based administrative interface.

When the alerting system control server 121 receives a message from the alerting system controller 130, then this message is examined to see if it contains an Identity (ID), i.e. a unique identity reference of the alerting system controller 130. If it does not contain an ID packet, then an error message may be delivered to the sender and the message may be discarded. However, if the message contains an ID, then a database may be updated to record the fact that this alerting system controller 130 is connected to the system 100. After the database is successfully updated, an "OK" message may be sent back to the alerting system controller 130.

In some embodiments, a message e.g. from a third party application may comprise a list of alerting system controller IDs. This may be a list of alerting system controllers 130 that may be activated to generate an alert for the user as requested by the third party application. For each ID in the list, the alerting system control server 121 firstly may check if the specified/ identified alerting system controller 130 is online, if not - it will continue to the next ID in the list. If the alerting system controller 130 according to the ID is online, the alerting system control server 121 performs the actions specified with the list of IDs.

An action may be identified by a numeric value that represent a specific task that the identified alerting system controller 130 is to execute. Each action value is translated into a command that is sent to the indicated client. This translation may be done by looking up a database entry, potentially based upon both the ID and the numeric action value in some embodiments. Using a database provides great control over the commands that may be initiated. Additionally, different third parties may be restricted to different sets of commands that they can request the alerting system controller 130 to execute. Some alerting system controllers 130 might not be able to perform a given command. If the action value that is requested for a specific alerting system controller 130 is allowed and can be performed, then this action value is translated into a command and sent to the specific client. The next ID may then be processed. This may then be continued until all of the IDs in the list have been processed. The next message in the queue can now be processed. It may be noted that the third party interface could be extended to support SIP messages, in some embodiments.

The administrative interface enables the administrator to read logs files and other data from the database. Via the administrative interface, the administrator can send test messages and commands to any specific identified alerting system controller 130. Overall, this administrative interface provides the administrator with an easy to use interface that can be used to control the system 100. This administrative interface can be accessed through a webbrowser, via scripts, or via programs in different embodiments.

The messages that can be sent to/ in the system 100 may defined by the JSON format and are easy to extend for further add-ons in some embodiments. There may be one set of messages for the open channel and one set for the closed channel in some embodiments. The open channel messages may be fixed and simple with as few options as possible in some embodiments. This may be done to make the message structure easy for third parties to follow, lowering the chance of failure. The closed channel messages may be flexible and extendable with control fields and communication in both directions, i.e. from the alerting system controller 130 to the alerting system control server 121 and the opposite, from the alerting system control server 121 to the alerting system controller 130. As the closed channel may be utilised inside the system 100, there is little danger of making the structure more complex with more options.

Some advantages with the described system 100 is that it is platform independent. The system 100 is able to be used regardless of the hardware or software the user uses for communication or alerting. Further, the system 100 is cloud-based. By having the majority of logic and computations in the cloud, i.e. the set of servers 120, rather than in the user's end device or the alerting system controller 130, program administration and software updates are facilitated. Further, the system 100 has a built-in security, compared to traditional alerting systems. Further the system 100 is compatible with current alerting systems if a user already has an alerting system at home, then the alerting system controller 130 may be able to connect to it and use it for alerting the user. Further, the described system 100 may be compatible with loT devices, if a user would rather use a smart light bulb than an alerting system receiver, then it is be possible to implement this use case using the new product, in some embodiments.

Some embodiments of the invention may define a modular implementation approach, and make it possible to reuse legacy systems such as e.g. standards, algorithms, implementations, components and products.

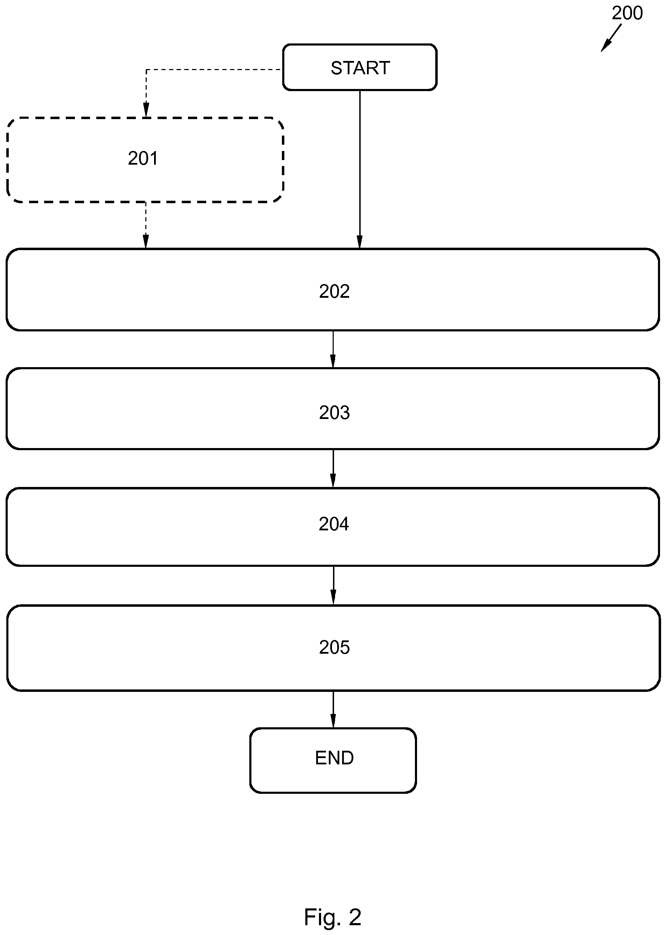

**Figure 2** is a flow chart illustrating embodiments of a method 200 for use in an alerting system control server 121 in a set of servers 120. The method 200 aims at alerting a user of an incoming signal for a service associated with the user. The service may be e.g. a video call, an incoming written message, a telephone call, a reminding message, or similar, intended for the user or a communication device of the user.

To correctly alert the user of the incoming signal, the method 200 may comprise a number of actions **201-205.** It is however to be noted that any, some, or all of the described actions 201-205, may be performed in a somewhat different chronological order than the enumeration indicates or be performed simultaneously or even be performed in a completely reversed order according to different embodiments. Also, some actions such as e.g. actions 201 may be performed only within some alternative embodiments. Further, it is to be noted that some actions may be performed in a plurality of alternative manners according to different embodiments, and that some such alternative manners may be performed only within some, but not necessarily all embodiments. The method 200 may comprise the following actions:
**Action 201** may be performed within some, but not necessarily all embodiments of the method 200. Action 201 comprises waiting for an incoming connection from the alerting system controller 130.

The incoming signal may comprise an ID of the alerting system controller 130 in some embodiments. Thereby, the alerting system control server 121 is informed about which alerting system controllers 130 that are connected to the alerting system 100.

**Action 202** comprises receiving information that an internet service server 110 is receiving an incoming signal for the service associated with the user, or a user device of the user.

The service may e.g. be an incoming video call to the user. However, as the user may not be situated at the computer, he/ she may not notice the incoming signal.

In some embodiments, the information may be received from the internet service server 110 over an open protocol channel.

**Action 203** comprises generating a control signal for triggering an alerting system controller 130 to alert the user of the incoming signal for the service by activating an alerting device 140.

**Action 204** comprises identifying the alerting system controller 130 and extract the address of the alerting system controller 130.

The current address of the alerting system controller 130 may be extracted from a database or register based on the identity of the alerting system controller 130.

**Action 205** comprises sending the generated 203 control signal to the identified 204 alerting system controller 130, for activating the alerting device 140 and thereby alerting the user; wherein the communication between the alerting system controller 130 and the alerting device 140 is made over a communication interface based on the Internet Protocol.

In some embodiments, the control signal may be sent to the identified 204 alerting system controller 130 over a closed protocol channel. Various cryptographic communication protocols may be utilised such as e.g. Internet Protocol Security (IPsec), Kerberos, Internet Key Exchange (IKE or IKEv2), Point-to-Point Protocol (PPP), Transport Layer Security (TLS), Secure Sockets Layer (SSL), etc. This is merely a non-exhaustive list of some arbitrary examples.

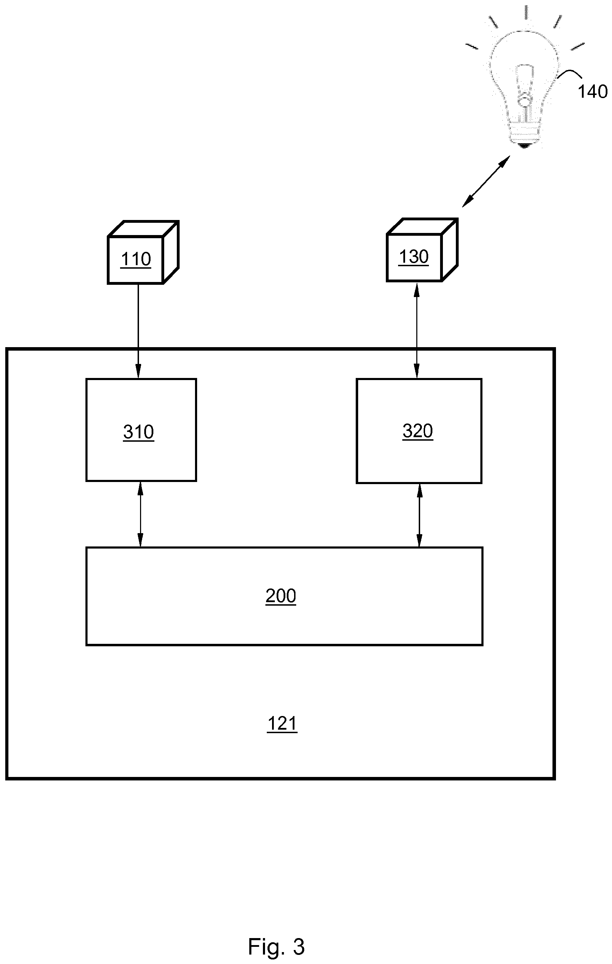

**Figure 3** illustrates an embodiment of an alerting system control server 121 in a set of servers 120. The alerting system control server 121 is configured for alerting a user of an incoming signal for a service associated with the user. The alerting system control server 121 is configured for performing the method 200 according to at least some of the previously described actions 201-205.

The alerting system control server 121 may communicate with the internet service server 110 via an open channel 310, and communicate with the alerting system controller 130 via a closed channel **320,** in some embodiments.

For enhanced clarity, any internal electronics or other components of the alerting system control server 121, not completely indispensable for understanding the herein described embodiments have been omitted from Figure 3.

The alerting system control server 121 is configured for receiving information that an internet service server 110 is receiving an incoming signal for the service. Further the alerting system control server 121 is configured for generating a control signal for triggering an alerting system controller 130 to alert the user of the incoming signal for the service by activating an alerting device 140. The alerting system control server 121 is further configured for identifying the alerting system controller 130 and extract the address of the alerting system controller 130. Also, the alerting system control server 121 is configured for sending the generated control signal to the identified alerting system controller 130, for activating the alerting device 140 and thereby alerting the user; wherein the communication between the alerting system controller 130 and the alerting device 140 is made over a communication protocol based on the Internet Protocol.

The alerting system control server 121 may comprise one or more processors, for performing the method 200 according to at least some of the previously described actions 201-205.

Such processor may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the alerting system control server 121 may further comprise at least one memory, according to some embodiments. The optional memory may comprise a physical device utilised to store data or programs, i.e., sequences of instructions, on a temporary or permanent basis. Further, the memory may be volatile or non-volatile.

The above described actions 201-205 to be performed in the alerting system control server 121 may thus be implemented through the one or more processors in the alerting system control server 121, together with computer program product for performing at least some of the functions of the actions 201-205. Thus a computer program comprising program code may perform the method 200 according to any, some, or all of the functions of the actions 201-205 for alerting a user of an incoming signal for a service associated with the user, when the computer program is loaded into a processor of the alerting system control server 121.

The computer program product mentioned above may be provided for instance in the form of a data carrier carrying computer program code for performing at least some of the actions 201-205 according to some embodiments when being loaded into the processor. The data carrier may be, e.g., a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the alerting system control server 121 remotely, e.g., over an Internet or an intranet connection.

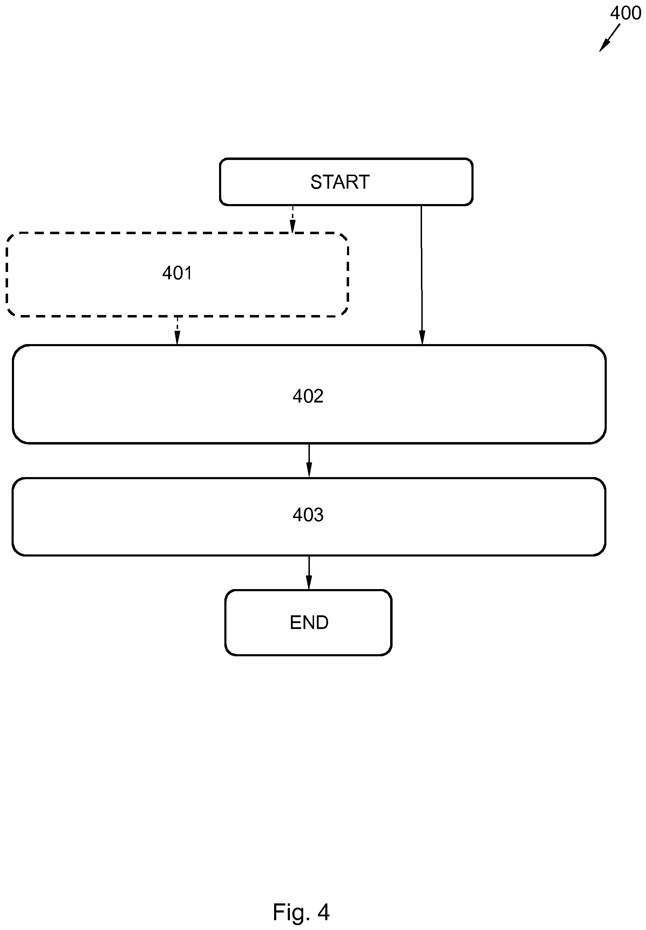

**Figure 4** is a flow chart illustrating embodiments of a method **400** for use in an alerting system controller 130. The method 400 aims at alerting a user of an incoming signal for a service associated with the user. The service may be e.g. a video call, an incoming written message, a telephone call, a reminding message, or similar, intended for the user or a communication device of the user.

To appropriately alert the user, the method 400 may comprise a number of actions **401-403.**

**Action 401** may be performed within some, but not necessarily all possible embodiments of the method 400. Action 401 comprises establishing a connection with the alerting system control server 121 in the set of servers 120.

**Action 402** comprises receiving a control signal for alerting the user of the incoming signal for the service by activating an alerting device 140, from an alerting system control server 121 in a set of servers 120.

The control signal may be received from the alerting system control server 121 over a closed protocol channel in some embodiments.

**Action 403** comprises sending the received 402 control signal to the alerting device 140, for activating the alerting device 140 and thereby alerting the user; wherein the communication between the alerting system controller 130 and the alerting device 140 is made over a communication protocol based on the Internet Protocol.

The control signal may be sent to the alerting device 140 via e.g. WiFi, Ethernet, Bluetooth, relay, Z-wave, ZigBee, IPv6 over Low power Wireless Personal Area Networks (6LoWPAN), Wireless Highway Addressable Remote Transducer (HART) Protocol, Wireless Universal Serial Bus (USB), or any other appropriate communication interface.

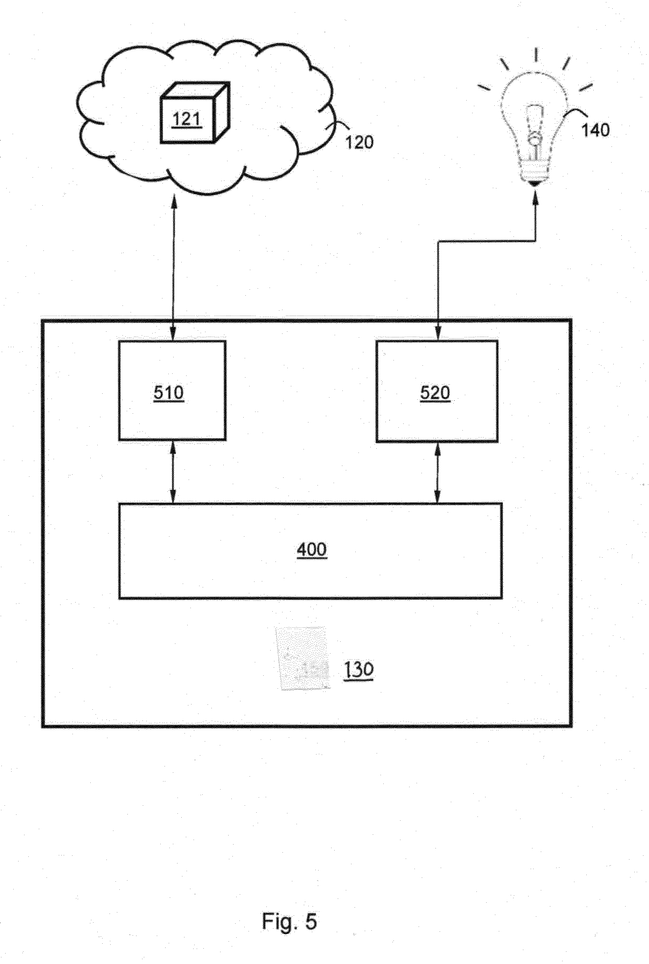

**Figure 5** illustrates an embodiment of an alerting system controller 130. The alerting system controller 130 is configured for performing the method 400 according to at least some of the previously described actions 401-403 for alerting a user of an incoming signal for a service associated with the user, or a communication device of the user.

The alerting system controller 130 may communicate with the alerting system control server 121 via a closed channel **510** and communicate with the alerting device 140 via an alerting device interface **520.**

For enhanced clarity, any internal electronics or other components of the alerting system controller 130, not completely indispensable for understanding the herein described embodiments have been omitted from Figure 5.

The alerting system controller 130 is configured for receiving a control signal for alerting the user of the incoming signal by activating an alerting device 140, from an alerting system control server 121 comprised in a set of servers 120. Furthermore, the alerting system controller 130 is configured for sending the received control signal to the alerting device 140, for activating the alerting device 140 and thereby alerting the user; wherein the communication between the alerting system controller 130 and the alerting device 140 is made over a communication protocol based on the Internet Protocol.

Further, the alerting system controller 130 may comprise one or more processors, for performing the method 400 according to at least some of the previously described actions 401-403.

Such processor may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the alerting system controller 130 may further comprise at least one memory, according to some embodiments. The optional memory may comprise a physical device utilised to store data or programs, i.e., sequences of instructions, on a temporary or permanent basis. According to some embodiments, the memory may comprise integrated circuits comprising silicon-based transistors. Further, the memory may be volatile or non-volatile.

The above described actions 401-403 to be performed in the alerting system controller 130 may thus be implemented through the one or more processors in the alerting system controller 130, together with computer program product for performing at least some of the functions of the actions 401-403. Thus a computer program comprising program code may perform the method 400 according to any, some, or all of the functions of the actions 401-403 for alerting a user of an incoming signal for a service associated with the user, when the computer program is loaded into a processor of the alerting system controller 130.

The computer program product mentioned above may be provided for instance in the form of a data carrier carrying computer program code for performing at least some of the actions 401-403 according to some embodiments when being loaded into the processor. The data carrier may be, e.g., a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the alerting system controller 130 remotely, e.g., over an Internet or an intranet connection.

The alerting system 100 for alerting a user of an incoming signal for a service associated with the user comprises an alerting system control server 121 in a set of servers 120, as illustrated in Figure 3 and described in the corresponding part of the description, and an alerting system controller 130, as illustrated in Figure 5 and described in the corresponding part of the description.

The terminology used in the description of the embodiments as illustrated in the accompanying drawings is not intended to be limiting of the described methods 200, 400; alerting system control server 121 and alerting system controller 130. Various changes, substitutions and/ or alterations may be made, without departing from the invention as defined by the appended claims.

## Claims

1. A method (200) for an alerting system control server (121) comprised in a set of servers (120) for alerting a user of an incoming signal for a service associated with the user, wherein the method (200) comprises:
waiting (201) for an incoming connection from the alerting system controller (130), whereby a plurality of alerting system controllers (130) is involved,
whereby the incoming connection contains a unique identity reference of the alerting system controller (130), to record that this alerting system controller (130) is connected online;
receiving (202) information that an internet service server (110) is receiving an incoming signal for the service;
generating (203) a control signal for triggering an alerting system controller (130) to alert the user of the incoming signal for the service by activating an alerting device (140);
identifying (204) the alerting system controller (130) and extracting the address of the alerting system controller (130); and
sending (205) the generated (203) control signal to the identified (204) alerting system controller (130), for activating the alerting device (140) and thereby alerting the user;
wherein the communication between the alerting system controller (130) and the alerting device (140) is made over a communication interface based on the Internet Protocol.

2. An alerting system control server (121) comprised in a set of servers (120) for alerting a user of an incoming signal for a service associated with the user, wherein the alerting system control server (121) is configured for waiting (201) for an incoming connection from the alerting system controller (130), whereby a plurality of alerting system controllers (130) is involved, whereby the incoming connection contains a unique identity reference of the alerting system controller (130), to record that this alerting system controller (130) is connected online;
receiving information that an internet service server (110) is receiving an incoming signal for the service;
generating a control signal for triggering an alerting system controller (130) to alert the user of the incoming signal for the service by activating an alerting device (140);
identifying the alerting system controller (130) and extracting the address of the alerting system controller (130);
sending the generated control signal to the identified alerting system controller (130), for activating the alerting device (140) and thereby alerting the user;
wherein the communication between the alerting system controller (130) and the alerting device (140) is made over a communication protocol based on the Internet Protocol.

3. The alerting system control server (121) according to claim 2, further configured for communication over an open protocol channel (310) with the network server (110), and for communication over a closed protocol channel (320) with the alerting system controller (130).

4. A method (400) for an alerting system controller (130) for alerting a user of an incoming signal for a service associated with the user, wherein the method (400) comprises:
establishing a connection from the alerting system controller (130) with an alerting system control server (121) comprised in a set of servers, whereby a plurality of alerting system controllers (130) is involved, whereby the connection contains a unique identity reference of the alerting system controller (130), to record that this alerting system controller (130) is connected online;
receiving (402) a control signal for alerting the user of the incoming signal for the service by activating an alerting device (140), from the alerting system control server (121) comprised in a set of servers (120); and
sending (403) the received (402) control signal to the alerting device (140), for activating the alerting device (140) and thereby alerting the user;
wherein the communication between the alerting system controller (130) and the alerting device (140) is made over a communication protocol based on the Internet Protocol.

5. An alerting system controller (130) for alerting a user of an incoming signal for a service associated with the user, configured for
establishing a connection from the alerting system controller (130), whereby a plurality of alerting system controllers (130) is involved, whereby the connection contains a unique identity reference of the alerting system controller (130), to record that this alerting system controller (130) is connected online;
receiving a control signal for alerting the user of the incoming signal by activating an alerting device (140), from an alerting system control server (121) comprised in a set of servers (120); and
sending the received control signal to the alerting device (140), for activating the alerting device (140) and thereby alerting the user;
wherein the communication between the alerting system controller (130) and the alerting device (140) is made over a communication protocol based on the Internet Protocol.

6. The alerting system controller (130) according to claim 5, further configured for communication over a closed protocol channel (510) with the alerting system control server (121) and for communication over an alerting device interface (520) with the alerting device (140).

7. An alerting system (100) for alerting a user of an incoming signal for a service associated with the user, wherein the alerting system (100) comprises:
an alerting system control server (121) comprised in a set of servers (120),
according to any of claims 2-3; and an alerting system controller (130) according to any of claims 5-6.

8. A computer program with a program code for performing a method (200) according to claim 1, or a method (400) according to claim 4, when the computer program runs on a computer.

## Patentansprüche

1. Verfahren (200) für einen Alarmsystem-Steuerungsserver (121), der in einer Gruppe von Servern (120) enthalten ist, um einen Benutzer über ein eingehendes Signal für einen dem Benutzer zugeordneten Dienst zu alarmieren, wobei das Verfahren (200) umfasst:
Warten (201) auf eine eingehende Verbindung von der Alarmsystem-Steuerungseinheit (130), wobei eine Mehrzahl von Alarmsystem-Steuerungseinheiten (130) beteiligt ist, wobei die eingehende Verbindung eine eindeutige Identitätsreferenz der Alarmsystem-Steuerungseinheit (130) umfasst, um aufzuzeichnen, dass diese Alarmsystem-Steuerungseinheit (130) online verbunden ist;
Empfangen (202) von Information, dass ein Internetdienstserver (110) ein eingehendes Signal für den Dienst empfängt;
Erzeugen (203) eines Steuerungssignals zum Auslösen einer Alarmsystem-Steuerungseinheit (130), um den Benutzer über das eingehende Signal für den Dienst durch Aktivieren einer Alarmierungsvorrichtung (140) zu alarmieren;
Identifizieren (204) der Alarmsystem-Steuerungseinheit (130) und Extrahieren der Adresse der Alarmsystem-Steuerungseinheit (130); und
Senden (205) des erzeugten (203) Steuerungssignals an die identifizierte (204) Alarmsystem-Steuerungseinheit (130), um die Alarmierungsvorrichtung (140) zu aktivieren und dadurch den Benutzer zu alarmieren;
wobei die Kommunikation zwischen der Alarmsystem-Steuerungseinheit (130) und der Alarmierungsvorrichtung (140) über eine auf dem Internetprotokoll basierende Kommunikationsschnittstelle erfolgt.

2. Alarmsystem-Steuerungsserver (121), der in einer Gruppe von Servern (120) enthalten ist, um einen Benutzer über ein eingehendes Signal für einen dem Benutzer zugeordneten Dienst zu alarmieren, wobei der Alarmsystem-Steuerungsserver (121) dazu ausgebildet ist, auf eine eingehende Verbindung von der Alarmsystem-Steuerungseinheit (130) zu warten (201), wobei eine Mehrzahl von Alarmsystem-Steuerungseinheiten (130) beteiligt ist, wobei die eingehende Verbindung eine eindeutige Identitätsreferenz der Alarmsystem-Steuerungseinheit (130) enthält, um aufzuzeichnen, dass diese Alarmsystem-Steuerungseinheit (130) online verbunden ist;
Empfangen von Information, dass ein Internetdienstserver (110) ein eingehendes Signal für den Dienst empfängt;
Erzeugen eines Steuerungssignals zum Auslösen einer Alarmsystem-Steuerungseinheit (130), um den Benutzer durch Aktivieren einer Alarmierungsvorrichtung (140) über das eingehende Signal für den Dienst zu alarmieren;
Identifizieren der Alarmsystem-Steuerungseinheit (130) und Extrahieren der Adresse der Alarmsystem-Steuerungseinheit (130);
Senden des erzeugten Steuerungssignals an die identifizierte Alarmsystem-Steuerungseinheit (130), um die Alarmierungsvorrichtung (140) zu aktivieren und dadurch den Benutzer zu alarmieren;
wobei die Kommunikation zwischen der Alarmsystem-Steuerungseinheit (130) und der Alarmierungsvorrichtung (140) über ein auf dem Internetprotokoll basierendes Kommunikationsprotokoll erfolgt.

3. Alarmsystem-Steuerungsserver (121) nach Anspruch 2, welcher ferner für die Kommunikation über einen offenen Protokollkanal (310) mit dem Netzwerkserver (110) und für die Kommunikation über einen geschlossenen Protokollkanal (320) mit der Alarmsystem-Steuerungseinheit (130) ausgebildet ist.

4. Verfahren (400) für eine Alarmsystem-Steuerungseinheit (130) zum Alarmieren eines Benutzers über ein eingehendes Signal für einen dem Benutzer zugeordneten Dienst, wobei das Verfahren (400) umfasst:
Herstellen einer Verbindung der Alarmsystem-Steuerungseinheit (130) mit einem Alarmsystem-Steuerungsserver (121), der in einer Gruppe von Servern enthalten ist, wobei eine Mehrzahl von Alarmsystem-Steuerungseinheiten (130) beteiligt ist,
wobei die Verbindung eine eindeutige Identitätsreferenz der Alarmsystem-Steuerungseinheit (130) enthält, um aufzuzeichnen, dass diese Alarmsystem-Steuerungseinheit (130) online verbunden ist;
Empfangen (402) eines Steuerungssignals zum Alarmieren des Benutzers über das eingehende Signal für den Dienst durch Aktivieren einer Alarmierungsvorrichtung (140) von dem Alarmsystem-Steuerungsserver (121), der in einer Gruppe von Servern (120) enthalten ist; und
Senden (403) des empfangenen (402) Steuerungssignals an die Alarmierungsvorrichtung (140), um die Alarmierungsvorrichtung (140) zu aktivieren und dadurch den Benutzer zu alarmieren;
wobei die Kommunikation zwischen der Alarmsystem-Steuerungseinheit (130) und der Alarmierungsvorrichtung (140) über ein Kommunikationsprotokoll erfolgt, das auf dem Internetprotokoll basiert.

5. Alarmsystem-Steuerungseinheit (130) zum Alarmieren eines Benutzers über ein eingehendes Signal für einen dem Benutzer zugeordneten Dienst, ausgebildet zum Herstellen einer Verbindung von der Alarmsystem-Steuerungseinheit (130), wobei eine Mehrzahl von Alarmsystem-Steuerungseinheiten (130) beteiligt ist, wobei die Verbindung eine eindeutige Identitätsreferenz der Alarmsystem-Steuerungseinheit (130) enthält, um aufzuzeichnen, dass diese Alarmsystem-Steuerungseinheit (130) online verbunden ist;
Empfangen eines Steuerungssignals zum Alarmieren des Benutzers über das eingehende Signal durch Aktivieren einer Alarmierungsvorrichtung (140) von einem Alarmsystem-Steuerungsserver (121), der in einer Gruppe von Servern (120) enthalten ist; und
Senden des empfangenen Steuerungssignals an die Alarmierungsvorrichtung (140), um die Alarmierungsvorrichtung (140) zu aktivieren und dadurch den Benutzer zu alarmieren;
wobei die Kommunikation zwischen der Alarmsystem-Steuerungseinheit (130) und der Alarmierungsvorrichtung (140) über ein Kommunikationsprotokoll erfolgt, das auf dem Internetprotokoll basiert.

6. Alarmsystem-Steuerungseinheit (130) nach Anspruch 5, welche ferner für die Kommunikation über einen geschlossenen Protokollkanal (510) mit dem Alarmsystem-Steuerungsserver (121) und für die Kommunikation über eine Alarmierungsvorrichtungs-Schnittstelle (520) mit der Alarmierungsvorrichtung (140) ausgebildet ist.

7. Alarmsystem (100) zum Alarmieren eines Benutzers über ein eingehendes Signal für einen dem Benutzer zugeordneten Dienst, wobei das Alarmsystem (100) umfasst: einen Alarmsystem-Steuerungsserver (121), der in einer Gruppe von Servern (120) enthalten ist, nach einem der Ansprüche 2 bis 3; und eine Alarmsystem-Steuerungseinheit (130) nach einem der Ansprüche 5 bis 6.

8. Computerprogramm mit einem Programmcode zur Durchführung eines Verfahrens (200) nach Anspruch 1 oder eines Verfahrens (400) nach Anspruch 4, wenn das Computerprogramm auf einem Computer läuft.

## Revendications

1. Procédé (200) pour un serveur de commande de système d'alerte (121) faisant partie d'un ensemble de serveurs (120) pour alerter un utilisateur au sujet d'un signal entrant pour un service associé à l'utilisateur, le procédé (200) comprenant :
attendre (201) une connexion entrante en provenance du dispositif de commande de système d'alerte (130), une pluralité de dispositifs de commande de système d'alerte (130) étant concernés, la connexion entrante contenant une référence d'identité unique du dispositif de commande de système d'alerte (130), pour enregistrer que ce dispositif de commande de système d'alerte (130) est connecté en ligne ;
recevoir (202) l'information qu'un serveur de service Internet (110) reçoit un signal entrant pour le service ;
générer (203) un signal de commande pour déclencher un dispositif de commande de système d'alerte (130) afin d'alerter l'utilisateur au sujet du signal entrant pour le service en activant un dispositif d'alerte (140) ;
identifier (204) le dispositif de commande de système d'alerte (130) et extraire l'adresse du dispositif de commande de système d'alerte (130) ; et
envoyer (205) le signal de commande généré (203) au dispositif de commande de système d'alerte (130) identifié (204), pour activer le dispositif d'alerte (140) et alerter ainsi l'utilisateur ;
la communication entre le dispositif de commande de système d'alerte (130) et le dispositif d'alerte (140) se faisant à travers une interface de communication utilisant le protocole IP.

2. Serveur de commande de système d'alerte (121) faisant partie d'un ensemble de serveurs (120) pour alerter un utilisateur au sujet d'un signal entrant pour un service associé à l'utilisateur, le serveur de commande de système d'alerte (121) étant configuré pour :
attendre (201) une connexion entrante en provenance du dispositif de commande de système d'alerte (130), une pluralité de dispositifs de commande de système d'alerte (130) étant concernés, la connexion entrante contenant une référence d'identité unique du dispositif de commande de système d'alerte (130), pour enregistrer que ce dispositif de commande de système d'alerte (130) est connecté en ligne ;
recevoir l'information qu'un serveur de service Internet (110) reçoit un signal entrant pour le service ;
générer un signal de commande pour déclencher un dispositif de commande de système d'alerte (130) afin d'alerter l'utilisateur au sujet du signal entrant pour le service en activant un dispositif d'alerte (140) ;
identifier le dispositif de commande de système d'alerte (130) et extraire l'adresse du dispositif de commande de système d'alerte (130) ;
envoyer le signal de commande généré au dispositif de commande de système d'alerte (130) identifié, pour activer le dispositif d'alerte (140) et alerter ainsi l'utilisateur ;
la communication entre le dispositif de commande de système d'alerte (130) et le dispositif d'alerte (140) se faisant à travers un protocole de communication basé sur le protocole IP.

3. Serveur de commande de système d'alerte (121) selon la revendication 2, configuré, en outre, à des fins de communication à travers un canal à protocole ouvert (310) avec le serveur de réseau (110), et à des fins de communication à travers un canal à protocole fermé (320) avec le dispositif de commande de système d'alerte (130).

4. Procédé (400) pour un dispositif de commande de système d'alerte (130) pour alerter un utilisateur au sujet d'un signal entrant pour un service associé à l'utilisateur, le procédé (400) comprenant :
établir une connexion en provenance du dispositif de commande de système d'alerte (130) avec un serveur de commande de système d'alerte (121) faisant partie d'un ensemble de serveurs, une pluralité de dispositifs de commande de système d'alerte (130) étant concernés, la connexion contenant une référence d'identité unique du dispositif de commande de système d'alerte (130), pour enregistrer que ce dispositif de commande de système d'alerte (130) est connecté en ligne ;
recevoir (402), en provenance du serveur de commande de système d'alerte (121) faisant partie d'un ensemble de serveurs (120), un signal de commande pour alerter l'utilisateur au sujet du signal entrant pour le service en activant un dispositif d'alerte (140) ; et
envoyer (403) le signal de commande reçu (402) au dispositif d'alerte (140), pour activer le dispositif d'alerte (140) et alerter ainsi l'utilisateur ;
la communication entre le dispositif de commande de système d'alerte (130) et le dispositif d'alerte (140) se faisant à travers un protocole de communication basé sur le protocole IP.

5. Dispositif de commande de système d'alerte (130) pour alerter un utilisateur au sujet d'un signal entrant pour un service associé à l'utilisateur, configuré pour :
établir une connexion en provenance du dispositif de commande de système d'alerte (130), une pluralité de dispositifs de commande de système d'alerte (130) étant concernés, la connexion contenant une référence d'identité unique du dispositif de commande de système d'alerte (130), pour enregistrer que ce dispositif de commande de système d'alerte (130) est connecté en ligne ;
recevoir, en provenance d'un serveur de commande de système d'alerte (121) faisant partie d'un ensemble de serveurs (120), un signal de commande pour alerter l'utilisateur au sujet du signal entrant en activant un dispositif d'alerte (140) ; et
envoyer le signal de commande reçu au dispositif d'alerte (140), pour activer le dispositif d'alerte (140) et alerter ainsi l'utilisateur ;
la communication entre le dispositif de commande de système d'alerte (130) et le dispositif d'alerte (140) se faisant à travers un protocole de communication basé sur le protocole IP.

6. Dispositif de commande de système d'alerte (130) selon la revendication 5, configuré, en outre, à des fins de communication à travers un canal à protocole fermé (510) avec le serveur de commande de système d'alerte (121) et à des fins de communication à travers une interface de dispositif d'alerte (520) avec le dispositif d'alerte (140).

7. Système d'alerte (100) pour alerter un utilisateur au sujet d'un signal entrant pour un service associé à l'utilisateur, le système d'alerte (100) comprenant :
un serveur de commande de système d'alerte (121) faisant partie d'un ensemble de serveurs (120), selon l'une quelconque des revendications 2 et 3 ; et un dispositif de commande de système d'alerte (130) selon l'une quelconque des revendications 5 et 6.

8. Programme informatique comprenant un code de programme pour mettre en pratique un procédé (200) selon la revendication 1, ou un procédé (400) selon la revendication 4, lorsque le programme informatique est exécuté sur un ordinateur.
